# EUROPÄISCHE PATENTSCHRIFT

(11) **EP 3 688 430 B1**
(45) Veröffentlichungstag und Bekanntmachung des Hinweises auf die Patenterteilung: **18.01.2023**
(21) Anmeldenummer: 18778456.6
(22) Anmeldetag: 25.09.2018
(51) Int. Cl.: G01K 1/14, G01K 1/143, G01K 7/42, G01K 1/16

(54) **TEMPERATURMESSEINRICHTUNG UND VERFAHREN ZUR TEMPERATURBESTIMMUNG**
TEMPERATURE MEASURING DEVICE AND METHOD FOR DETERMINING TEMPERATURE
DISPOSITIF DE MESURE DE TEMPÉRATURE ET PROCÉDÉ DE DÉTERMINATION DE TEMPÉRATURE

(30) Priorität: 27.09.2017 DE 102017122442
(43) Veröffentlichungstag der Anmeldung: 05.08.2020
(73) Patentinhaber: ABB Schweiz AG, 5400 Baden (CH)
(72) Erfinder: UDE, Peter, 63457 Hanau (DE); DAAKE, Wilhelm, 32469 Petershagen (DE); HORSTKOTTE, Jürgen, 32130 Enger (DE); SOSALE, Guruprasad, 80997 München (DE); GEBHARDT, Jörg, 55130 Mainz (DE); SZÁSZ, Paul, 68723 Plankstadt (DE); DECKER, Andreas, 49377 Vechta (DE)
(74) Vertreter: Maiwald GmbH
(86) Internationale Anmeldenummer: PCT/EP2018/075901
(87) Internationale Veröffentlichungsnummer: WO 2019/063519

(56) Entgegenhaltungen:
- DE-A1-102011 114 620
- DE-A1-102014 103 430
- US-A- 5 064 604

## Beschreibung

Die Erfindung betrifft eine Temperaturmesseinrichtung zur Bestimmung einer Mediumstemperatur über die Temperatur einer das Medium umschließenden Oberfläche, umfassend mindestens einen Messsensor und mindestens einen Referenzsensor. Des Weiteren betrifft die Erfindung ein Verfahren zur Bestimmung einer Mediumstemperatur.

Bei der industriellen Prozessmesstechnik sind Temperaturmesseinrichtungen bekannt, bei denen ein oder mehrere Temperatursensoren in einem Schutzrohr montiert sind, welches zumindest teilweise in den Innenraum der Rohrleitung oder eines Behälters hineinragt. Hierfür muss in das Rohr oder den Behälter eine Öffnung mit zugehöriger Abdichtung der Temperaturmesseinrichtung vorgesehen werden.

Diese invasiven Messanordnungen haben den Nachteil, dass Bauteile in den Prozessraum hineinragen und es dadurch zu Strömungsenergieverlusten, Abrasion, Bruchschäden, Behinderung der Reinigungsvorgänge und potentielle Leckagen kommen kann. Außerdem ist gegebenenfalls der Explosionsschutz bei jeder Rohr- und Behälteröffnung zu betrachten.

Das Einsatzgebiet der Erfindung erstreckt sich auf Temperaturmesseinrichtungen, bei denen ein Oberflächentemperatursensor auf einer Oberfläche aufliegt, um die Temperatur eines darunter bzw. dahinter liegenden Mediums zu bestimmen. Idealerweise sollte ein solcher Sensor die Temperatur des Mediums annehmen, welches von der Oberfläche umschlossen wird. Ist der Temperatursensor beispielsweise als elektrisches Thermoelement ausgebildet, so kann durch Messung der Thermospannung auf die Temperatur des Sensors und somit auf die Temperatur des Mediums geschlossen werden, sofern sich beide im thermischen Gleichgewicht befinden, also die gleiche Temperatur aufweisen.

Aus der DE 198 00753 A1 ist eine nicht-invasive Temperaturmesseinrichtung mit einem Messsensor und einem Referenzsensor bekannt, bei der der Messsensor mit der Messstelle verbunden ist, der Referenzsensor auf Umgebungstemperatur gehalten ist und der Messsensor und der Referenzsensor mit einem thermischen Isolationsmaterial beabstandet sind.

Nachteilhaft aus dieser, aus dem allgemein bekannten Stand der Technik bekannten, Vorgehensweise ist, dass der Oberflächentemperatursensor thermisch nicht nur mit der Oberfläche sondern auch mit seiner Umgebung, beispielsweise der umgebenden Luft, wechselwirkt. Aufgrund dessen misst der Oberflächentemperatursensor in der Praxis weder die Temperatur des Mediums, noch der Oberfläche, sondern eine Mischtemperatur, die zwischen der Temperatur des Mediums und der Umgebungstemperatur liegt. Üblicherweise ist der Referenztemperatursensor weit entfernt vom Prozess, im allgemeinen im Transmitterkopf, montiert.

Dabei ist zu berücksichtigen, dass Umgebungstemperaturänderungen, die auch auf die mechanische Verbindung zwischen Sensor und Transmitterkopf wirken, die Messgenauigkeit erheblich reduzieren können. Daher werden sie dann häufig mit einer thermischen Isolation versehen, deren tatsächliche Wirkung im Anwendungsfall meistens nicht bekannt ist.

Auch bei Änderungen der Prozeßtemperatur erreicht ein weit vom Prozeß entfernter Referenz-Temperatursensor nur äußerst langsam seinen neuen thermischen Gleichgewichtswert. Das bedeutet für einen Kompensationsalgorithmus oft ein Verzögerungsverhalten über etliche Minuten.

Aus der DE 87 677 B1 ist eine Temperaturmesseinrichtung zur Bestimmung der Temperatur von flüssigen und zähflüssigen Massen bekannt, welche neben einem Sensor in der Spitze eines in das Medium eintauchenden stabförmigen Temperaturfühlers einen zweiten Sensor im Schaft des Fühlers umfasst. Die Einrichtung weist eine Recheneinheit mit darauf elektronisch hinterlegter Näherungsformel zur Errechnung einer Mediumstemperaturnäherung auf, wobei die Näherungsformel als Summe aus der Mischtemperatur und einem Produkt aus zwei Faktoren, der eine Faktor sich aus der Differenz von der Mischtemperatur und der Umgebungstemperatur ergebend und der zweite Faktor ein Kalibrierungsfaktor darstellend, hinterlegt ist.

In der US 2007/0206655 A1 sind eine Einrichtung und Verfahren zur Bestimmung der menschlichen Körpertemperatur beschrieben, wobei die Einrichtung auf der Körperoberfläche angeordnet ist. Dabei geht die vermittelte technische Lehre davon aus, dass physikalische Eigenschaften des Messobjekts - insbesondere der Wärmeübergangswiderstand der Haut - in einer gewissen Toleranz hinreichend genau bekannt sind. Ferner wird die korrekte Platzierung der Einrichtung an einer vorgegebenen Messstelle vorausgesetzt. Offensichtlichen Unsicherheiten bei der Platzierung und dem Wärmeübergangswiderstand werden mit einem ein- oder zweidimensionalen Sensorarray zumindest zur Bestimmung der Oberflächentemperatur begegnet. Ferner sieht die vermittelte technische Lehre eine thermisch isolierende Zwischenschicht zwischen den Messstellen für die Oberflächentemperatur und die Umgebungstemperatur vor, deren Eigenschaften - insbesondere deren Wärmeübergangswiderstand - hinreichend bekannt ist, weil die Schichtstärke und das verwendete Material bekannt sind. Vor dem Hintergrund bekannter physikalischer Eigenschaften sieht die technische Lehre die Bestimmung der Körpertemperatur aus der ortsgebundenen Oberflächentemperatur und der Umgebungstemperatur mit Hilfe von bekannten Wärmeübergangswiderständen vor. Abgesehen von der Untauglichkeit der offenbarten Materialien im industriellen Bereich, insbesondere im Hochtemperaturbereich > 400°C, sind die bestimmenden Wärmeübergangswiderstände im Bereich industrieller Temperaturmesstechnik regelmäßig völlig unbekannt.

Die DE 10 2014 103 430 A1 offenbart eine Temperaturmesseinrichtung zur Bestimmung der Temperatur eines vorzugsweise durch ein Rohr fließenden Messmediums, wozu ein Messsensor sowie ein Referenzsensor entlang eines thermischen Verbindungspfades zwischen der das Messmedium umschließenden Rohrwandung und der Umgebung angeordnet sind. Zur Erzielung einer zuverlässigen Temperaturmessung sind die beiden Sensoren derart zueinander angeordnet, dass der Wärmewiderstand zwischen dem Messsensor und dem Referenzsensor kleiner ist als der Wärmewiderstand zwischen dem außenliegenden Referenzsensor und der Umgebung. Dies wird hier durch Materialeigenschaften der Sensoren sowie dazwischenliegenden Kopplungskörpern erzielt.

Die US 5 064 604 A offenbart eine technische Lösung zur Bestimmung eines Temperaturgradienten bei einer ähnlichen Temperaturmesseinrichtung mit einem stabförmigen wärmeleitenden Element, das radial in Bezug auf ein Strömungsrohr ausgerichtet ist und mindestens zwei Temperatursensoren enthält. Ein erstes Ende des wärmeleitenden Elements ist in Kontakt mit oder in thermischer Verbindung mit dem Außenumfang des Rohres angeordnet, während ein zweites Ende des wärmeleitenden Elements vom Rohr beabstandet ist. Infolge der Wärmeleitung durch das Rohr zum ersten Ende wird ein Temperaturgradient über das wärmeleitende Element bereitgestellt, welcher über die Temperatursensoren bestimmbar ist.

Die DE 10 2011 114 620 A1 offenbart eine Temperaturmesseinrichtung zur Bestimmung der Körperkerntemperatur eines Lebewesens, umfassend einen ersten Temperatursensor zur Erfassung der Hauttemperatur des Lebewesens, einen Isolator zur Aufnahme des ersten Temperatursensors und einen zweiten Temperatursensor im Isolator zur Erfassung einer weiteren Temperatur, und darüber hinaus einen dritten Temperatursensor, der gegenüberliegend zum ersten Temperatursensor am Isolator angeordnet ist, zur Erfassung einer umgebungsnahmen Temperatur.

Es ist die Aufgabe der vorliegenden Erfindung, eine Temperaturmesseinrichtung zur nicht-invasiven Messung einer Mediumstemperatur durch eine das Medium umgebende Gehäusewand anzugeben, deren dynamische Messgenauigkeit verbessert ist.

Die Aufgabe wird ausgehend von einer Temperaturmesseinrichtung gemäß Anspruch 1 gelöst. Ein mit der Erfindung zusammenhängendes Verfahren wird in Anspruch 7 vorgestellt. Vorteilhafte Ausgestaltungen der Erfindung sind jeweils in rückbezogenen Ansprüchen angegeben.

Die Erfindung geht aus von mindestens einer Temperaturmesseinrichtung zur Bestimmung einer Mediumstemperatur über die Temperatur einer das Medium umschließenden Oberfläche, umfassend mindestens einen auf der Oberfläche aufliegenden Messsensor und mindestens einen von dem Medium beabstandeten Referenzsensor, wobei der mindestens eine Messsensor und der mindestens eine Referenzsensor mit einem gemeinsamen Messwertverarbeitungsmittel, welches die Umgebungstemperatur aufweist, verbunden sind.

Erfindungsgemäß sind der mindestens eine Messsensor und der mindestens eine Referenzsensor in verschiedenen Abständen mit demselben wärmeleitfähigen Element thermisch verbunden, welches zwischen dem mindestens eine Messsensor und dem gemeinsamen Messwertverarbeitungsmittel angeordnet ist.

Mit anderen Worten sind der mindestens eine Messsensor und der mindestens eine Referenzsensor auf demselben thermischen Leitweg zwischen dem Medium und dem gemeinsamen Messwertverarbeitungsmittel angeordnet. Während der bekannte Stand der Technik den Fachmann lehrt, den mindestens einen Referenzsensor möglichst auf der Umgebungstemperatur oder zumindest nahe der Umgebungstemperatur zu halten, hat sich in überraschender Weise herausgestellt, dass diese baulich aufwändige Anordnung nicht nur verzichtbar ist sondern auch zu einem schlechten Ansprechverhalten der Temperaturmesseinrichtung führt. Vielmehr genügt es, den thermischen Leitweg zwischen der zu bestimmenden Prozesstemperatur des Mediums und der Umgebungstemperatur des gemeinsamen Messwertverarbeitungsmittels nach Art eines Spannungsteilers, an dessen Abgriff der mindestens eine Referenzsensor angeordnet ist, anzuzapfen.

Da der Messsensor und der mindestens eine Referenzsensor mit demselben wärmeleitfähigen Element thermisch verbunden sind, wirken sich Temperaturänderungen sowohl bei der Prozesstemperatur des Mediums als auch der Umgebungstemperatur gleichzeitig auf beide Sensoren jedoch in unterschiedlicher Quantität aus. Dadurch wird das Ansprechverhalten auf jedwede Temperaturänderungen unabhängig von eventuellen thermischen Isolierungen des Behälters nachhaltig verbessert.

In besonders vorteilhafter Ausgestaltung der Erfindung sind sowohl der mindestens eine Messsensor als auch der mindestens eine Referenzsensor als handelsübliche Messeinsätze für die industrielle Temperaturmessung, sogenannte Insets, ausgebildet. Insbesondere für Hochtemperaturmessungen bestehen diese Messeinsätze aus einer mineralisolierten Mantelleitung, welche an einem Ende mit einem temperatursensitiven Element ausgestattet ist oder deren innenliegende, einseitig verbundene Leiter bereits ein Thermoelement bilden. Derartige Messeinsätze die im industriellen Umfeld erforderliche Robustheit sowie Temperaturbeständigkeit, insbesondere oberhalb 200°C, auf, bei denen Standard-Kabel und -Isolationsmaterialien nicht benutzt werden können.

Darüber hinaus führt die erfindungsgemäße Anordnung zu einer kompakten Bauform der Temperaturmesseinrichtung, da sowohl der mindestens eine Messsensor als auch der mindestens eine Referenzsensor auf demselben Weg zwischen der Messstelle am Behälter und dem Messwertverarbeitungsmittel angeordnet sind.

Im Einzelnen ist der mindestens eine Messsensor über eine gut wärmeleitende Verbindung, etwa mit einem Wärmewidestand **R0,** mit der Messtelle am Behälter verbunden. Der mindestens eine Referenzsensor ist von der Messtelle am Behälter beabstandet auf dem hauptsächlichen thermischen Verbindungspfad zwischen der Messtelle am Behälter und der Umgebung angeordnet. Dabei werden die auf den mindestens einen Messsensor wirkenden Umgebungseinflüsse weitgehend vollständig erfasst. Für den Fachmann bedeutet der Terminus "hauptsächlicher thermischer Verbindungspfad" im Rahmen dieser Offenbarung, dass die Wärmeleitung von der Meßstelle nach außen - der Umgebung im Sinne eines thermischen Reservoirs - oder umgekehrt nach innen - bei kalten Prozessen - in guter Näherung durch eine lineare Aneinanderreihung von thermischen Widerständen entlang dieses Pfades beschrieben werden kann. Es treten nur in geringem Maße seitliche Wärmefluß-Leckagen oder Zuflüsse auf.

Der Referenzsensor ist zwischen dem Messwertverarbeitungsmittel und dem Messsensor platziert. Der jeweilige Referenzsensor hat dabei vorteilhafterweise einen wohl definierten Wärmewiderstand **R1** zum Messsensor und einen wohl definierten Wärmewiderstand **R2** zur Umgebungstemperatur. Im Falle von Standard-Thermometer-Insets sind diese Wärmewiderstände ungefähr proportional zur Länge des Insets zwischen den jeweiligen Temperaturmesspunkten. Der Wärmewiderstand **R2** umfasst dabei auch den Wärmewiderstand des Messwertverarbeitungsmittels sowie den konvektiven Widerstand zwischen der Außenfläche des Messwertverarbeitungsmittels und Umgebungsluft.

Zusammengefasst besteht der Unterschied der vorliegenden Erfindung zum bekannten Stand der Technik darin, den mindestens einen Referenzsensor nicht mehr wie bisher weit vom Prozess entfernt einzubauen mit **R1** » **R0** und **R1** » **R2** sondern so, dass beispielsweise gilt **R1** ≈ **R0** und **R1** « **R2**.

Durch die gewählte Anordnung ergeben sich mit und ohne Isolation des Behälters sowohl bei konstanter als auch bei veränderlicher Oberflächentemperatur nur geringe Abweichungen von der jeweiligen Ist-Temperatur der Oberfläche. Der Fall ohne Isolation ist oft tolerabel, weil die Sensoranordnung vorteilhafterweise von einer Haltekonstruktion aus mäßig wärmeleitendem Metall, wie etwa Edelstahl, umgeben sein kann. Eine solche Haltekonstruktion kann aus einem Metall-Rohradapter bestehen, der zum Beispiel mit Metallbändern am Rohr befestigt wird, und zusätzlich auch aus einem sogenenannten "Halsrohr". Die Sensoranordnung mit dem für das Meßprinzip wesentlichen Wärmepfad kann dann im allgemeinen durch eine Luftschicht beispielsweise vom Halsrohr und vom Rohradapter getrennt sein. Dadurch wird die Dominanz des thermischen Haupt-Weges entlang der Sensoren vorteilhaft beeinflußt, denn die Luftschichten wirken bereits stark thermisch isolierend.

Im Ergebnis genügt dann eine quasi-statische Temperaturkompensation zur Berechnung der Oberflächentemperatur auch bei schnellen Änderungen der letzteren. Die Bildung zeitlicher Ableitungen der Messsignale, welche im Allgemeinen große Probleme bereiten können, weil sie das Messrauschen verstärken, sind vorteilhafterweise verzichtbar.

Die Berechnung der Oberflächentemperatur aus den Messsignalen des Messsensors und des Referenzsensors erfolgt mit für sich bekannten Methoden, wie sie beispielsweise in der DE 10 2014 019 365 beschrieben sind.

Als besonders vorteilhaft hat sich eine Temperaturmesseinrichtung erwiesen, bei der der Referenzsensor dem Messsensor zumindest thermisch näherliegt als dem Messwertverarbeitungsmittel, so dass **R1** < **R2** ist. Somit ist bei allen wärmeleitfähigen Verbindungen zwischen dem Messsensor und dem Messwertverarbeitungsmittel, deren Wärmewiderstände ungefähr proportional zur Länge sind - dazu gehören insbesondere aber nicht abschließend die oben erwähnten mineralisolierten Mantelleitungen -, der geometrische Abstand des Referenzsensors zum Messsensor geringer als der geometrische Abstand des Referenzsensors zum Messwertverarbeitungsmittel.

Überraschenderweise hat sich als besonders vorteilhaft herausgestellt, wenn das Verhältnis der Wärmewiderstände **R2/R1** > 10 ist. Somit ist bei allen wärmeleitfähigen Verbindungen zwischen dem Messsensor und dem Messwertverarbeitungsmittel, deren Wärmewiderstände ungefähr proportional zur Länge sind - dazu gehören insbesondere aber nicht abschließend die oben erwähnten mineralisolierten Mantelleitungen -, der geometrische Abstand des Referenzsensors zum Messsensor viel geringer als der geometrische Abstand des Referenzsensors zum Messwertverarbeitungsmittel.

Selbst bei einem Verhältnis der Wärmewiderstände **R2/R1** > 50 treten die oben erwähnten Vorteile der erfindungsgemäßen Temperaturmesseinrichtung ein. Dabei ist der Referenzsensor geometrisch nur geringfügig vom Messsensor beabstandet. Vorteilhafterweise begünstigt eine solche Anordnung die Miniaturisierung sowie kompakte Bauformen der Temperaturmesseinrichtung. Besonders vorteilhaft ist die Unterbringung des Messsensors und des Referenzsensors in einem gemeinsamen Gehäuse.

Nach einem weiteren Merkmal der Erfindung ist auf dem hauptsächlichen thermischen Verbindungspfad zwischen der Messtelle am Behälter und der Umgebung mindestens ein weiterer Referenzsensor angeordnet. Mit jeder zusätzlichen Referenztemperatur wird die Genauigkeit der Temperaturmesseinrichtung verbessert. Darüber hinaus ermöglichen zusätzliche Referenztemperaturen auch Diagnosen, ob die Isolierung hinreichend ist, die Montage oder Umgebungsbedingungen den Anforderungen entsprechen oder wie eindimensional der thermische Pfad ist.

Nach einem weiteren Merkmal der Erfindung sind verschiedene Sensorelement-Typen, wie Widerstandsthermometer (Kalt- oder Heißleiter), Thermoelemente, für den Messsensor und den Referenzsensor in beliebiger Misschung in derselben Temperaturmesseinrichtung zulässig.

Nach einem weiteren Merkmal der Erfindung ist der Winkel der Temperaturmesseinrichtung zur Messoberfläche beliebig wählbar. Die Messanordnung kann sowohl senkrecht als auch parallel oder in jedem anderen Winkeln zur Meßoberfläche angeordnet werden. Vorteilhafterweise sind somit auch Messstellen an schwer zugänglichen Messorten bedienbar.

Die Erfindung wird nachstehend anhand von Ausführungsbeispielen näher erläutert. Die dazu erforderlichen Zeichnungen zeigen:
- Figur 1: eine erste Ausführungssform einer Temperaturmesseinrichtung mit mindestens einer mineralisolierten Mantelleitung,
- Figur 2: ein, nicht zum Erfindungsgegenstand gehöriges, Beispiel einer Temperaturmesseinrichtung mit einem Halter

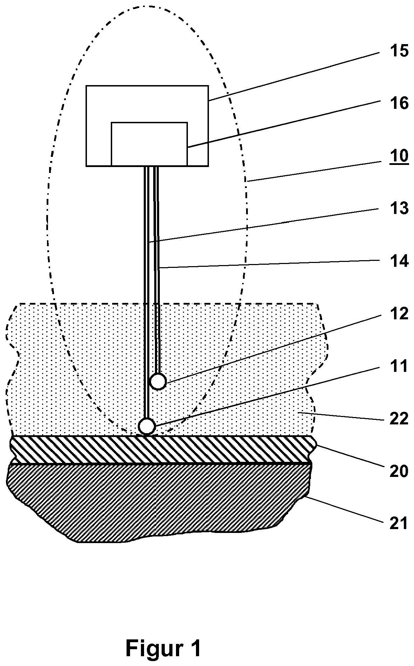

In der Figur 1 ist eine Temperaturmesseinrichtung **10** mit ihren erfindungswesentlichen Bestandteilen prinzipiell an einer geschnitten dargestellten Behälterwand **20** gezeigt. Die Temperaturmesseinrichtung **10** besteht im Wesentlichen aus einem Kopfgehäuse **15,** in welchem Messwertverarbeitungsmittel **16** untergebracht sind. Ein Messsensor **11** ist über eine Zuleitung **13** mit dem Messwertverarbeitungsmittel **16** im Kopfgehäuse **15** verbunden. Darüber hinaus ist ein Referenzsensor **12** über eine separate Zuleitung **14** mit dem Messwertverarbeitungsmittel **16** im Kopfgehäuse **15** verbunden.

Weiterhin ist eine Messstelle zur Bestimmung der Temperatur eines Mediums **21** dargestellt, welches in einem Behälter eingeschlossen ist. Dazu ist repräsentativ ein Ausschnitt einer Behälterwand **20** des Behälters an der Messstelle gezeigt.

Die Temperaturmesseinrichtung **10** ist außerhalb des Behälters - in der Zeichenebene oberhalb der Behälterwand **20** - an der Messstelle angeordnet und das Medium **21** ist innerhalb des Behälters - in der Zeichenebene unterhalb der Behälterwand **20** - eingeschlossen.

Der Behälter kann auf der äußeren Oberfläche der Behälterwand **20** eine thermische Isolationsschicht **22** aufweisen, welche einen Wärmefluss zwischen der äußeren Oberfläche der Behälterwand **20** und der Umgebung zumindest reduziert.

Zur Bestimmung der Mediumstemperatur ist die Temperaturmesseinrichtung **10** an der Messstelle derart angeordnet, dass sich der Messsensor **11** nahe der das Medium **21** umschließenden Oberfläche der Behälterwand **20** befindet.

Zumindest die Zuleitung **13** zum Messsensor **11** ist als für sich bekannte, mineralisolierte Mantelleitung ausgebildet. Der Wärmewiderstand einer derartigen mineralisolierte Mantelleitung ist bauartbedingt ungefähr proportional zu seiner Länge. Somit ist der Messsensor **11** über einen bekannten Wärmewiderstand mit dem Messwertverarbeitungsmittel **16** im Kopfgehäuse **15** verbunden, welches Umgebungstemperatur annimmt.

In dieser Ausführungsform ist der Messsensor **11** vorteilhaft als Thermoelement ausgeführt, dessen Messspitze in Kontakt mit der Behälterwand **20** gebracht ist. Insbesondere kann vorgesehen sein, die Messspitze mit einer Silbereinlage auszustatten oder Silberspitze auszubilden. Vorteilhafterweise wird dadurch der Wärmewidestand R0 auf ein Minimum reduziert.

Die mineralisolierte Mantelleitung der Zuleitung **13** zum Messsensor **11** bildet den hauptsächlichen thermischen Verbindungspfad zwischen der Messtelle an der Behälterwand **20** und der Umgebung, also zwischen Oberflächentemperatur und Umgebungstemperatur.

Entlang dieses hauptsächlichen thermischen Verbindungspfads ist der Referenzsensor **12** zumindest thermisch mit der Zuleitung **13** zum Messsensor **11** verbunden. Beispielsweise aber nicht abschließend ist der Referenzsensor **12** durch Kleben, Schweißen, Löten, Klemmen oder Crimpen an die Zuleitung **13** gefügt. Dabei kann der Referenzsensor **12** als Widerstandselement ausgebildet sein.

Der geometrische Abstand des Referenzsensors **12** vom Messsensor **11** ist kleiner als der geometrische Abstand des Referenzsensors **12** vom Messwertverarbeitungsmittel **16** im Kopfgehäuse **15.** Wegen der Proportionalität des Wärmewiderstands der mineralisolierten Mantelleitung der Zuleitung **13** zum Messsensor **11** ist jedenfalls das Verhältnis der Wärmewiderstände **R2/R1** > 1. Besonders vorteilhaft sind alle Verhältnisse der Wärmewiderstände **R2/R1** > 10. Dabei ist der Referenzsensor **12** in unmittelbarer Nähe zum Messsensor **11** angeordnet.

In Abhängigkeit von den Höchsttemperaturen am Einsatzort kann die Zuleitung **14** zum Referenzsensor **12** auch als mineralisolierte Mantelleitung ausgeführt sein.

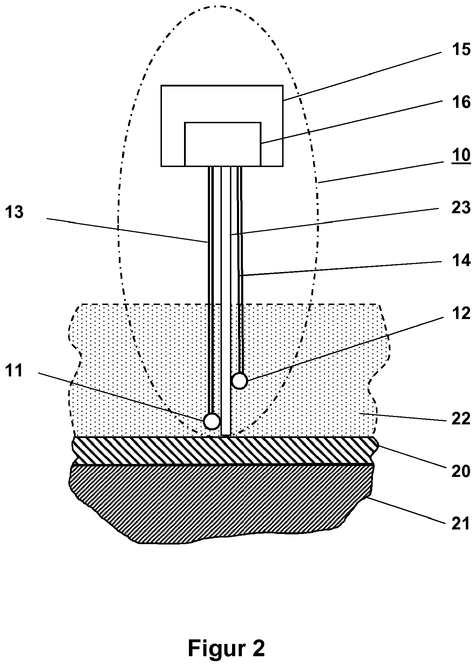

In der Figur 2 ist unter Verwendung gleicher Bezugszeichen für gleiche Mittel eine weitere Temperaturmesseinrichtung **10** mit ihren Bestandteilen prinzipiell an einer geschnitten dargestellten Behälterwand **20** gezeigt. Die Temperaturmesseinrichtung **10** besteht im Wesentlichen aus einem Kopfgehäuse **15,** in welchem Messwertverarbeitungsmittel **16** untergebracht sind. Ein Messsensor **11** ist über eine Zuleitung **13** mit dem Messwertverarbeitungsmittel **16** im Kopfgehäuse **15** verbunden. Darüber hinaus ist ein Referenzsensor **12** über eine separate Zuleitung **14** mit dem Messwertverarbeitungsmittel **16** im Kopfgehäuse **15** verbunden.

Weiterhin ist eine Messstelle zur Bestimmung der Temperatur eines Mediums **21** dargestellt, welches in einem Behälter eingeschlossen ist. Dazu ist repräsentativ ein Ausschnitt einer Behälterwand **20** des Behälters an der Messstelle gezeigt.

Die Temperaturmesseinrichtung **10** ist außerhalb des Behälters - in der Zeichenebene oberhalb der Behälterwand **20** - an der Messstelle angeordnet und das Medium **21** ist innerhalb des Behälters - in der Zeichenebene unterhalb der Behälterwand **20** - eingeschlossen.

Der Behälter kann auf der äußeren Oberfläche der Behälterwand **20** eine thermische Isolationsschicht **22** aufweisen, welche einen Wärmefluss zwischen der äußeren Oberfläche der Behälterwand **20** und der Umgebung zumindest reduziert.

Im Unterschied zu der in Figur 1 gezeigten Temperaturmesseinrichtung **10** weist dieses Beispiel ein separates physisches Bauteil auf, welches den hauptsächlichen thermischen Verbindungspfad zwischen der Messstelle an der Behälterwand **20** und der Umgebung, also zwischen Oberflächentemperatur und Umgebungstemperatur, bildet und im Weiteren als Halter **23** bezeichnet wird.

In vorteilhafter Ausgestaltung dieses Beispiels ist der Halter **23** zur Befestigung des Kopfgehäuse **15** mit dem Messwertverarbeitungsmittel **16** an der Behälterwand **20** ausgebildet.

Der Messsensor **11** und der Referenzsensor **12** sind voneinander beabstandet mit diesem Halter **23** verbunden. Dabei ist der Messsensor **11** näher an der Messstelle auf der Behälterwand **20** angeordnet als der Referenzsensor **12.** Dabei ist der Messsensor **11** nahe der Messstelle angeordnet. Jedoch ist ein zwingender Kontakt zur Messstelle verzichtbar.

Ausgehend von einer gleichbleibenden Form mit konstantem Querschnitt weist der Halter **23** einen zu seiner Länge proportionalen Wärmewiderstand auf. Der geometrische Abstand des Referenzsensors **12** vom Messsensor **11** ist kleiner als der geometrische Abstand des Referenzsensors **12** vom Messwertverarbeitungsmittel **16** im Kopfgehäuse **15.** Wegen der Proportionalität des Wärmewiderstands des Halters **23** ist jedenfalls das Verhältnis der Wärmewiderstände **R2/R1** > 1. Besonders vorteilhaft sind alle Verhältnisse der Wärmewiderstände **R2/R1** > 10. Dabei ist der Referenzsensor **12** in unmittelbarer Nähe zum Messsensor **11** angeordnet.

Der Halter **23** kann aus einem metallischen Material bestehen oder auch aus einem keramischen Material, beispielsweise einer Glaskeramik. Im Falle eines keramischen Halter **23** sind der Messsensor **11** und der Referenzsensor **12** galvanisch von einem metallischen Behälter getrennt. Vorteilhafterweise sind damit elektrische Isolierungen des Messsensors **11** und des Referenzsensors **12** gegenüber dem Halter **23** sowie einem metallischen Behälter verzichtbar.

### Bezugszeichenliste

- 10: Temperaturmesseinrichtung
- 11: Messsensor
- 12: Referenzsensor
- 13: Zuleitung zum Messsensor
- 14: Zuleitung zum Referenzsensor
- 15: Kopfgehäuse
- 16: Messwertverarbeitungsmittel

- 20: Behälterwand
- 21: Medium
- 22: Isolationsschicht
- 23: Halter

- R0, R1, R2: Wärmewiderstand

## Patentansprüche

1. Temperaturmesseinrichtung (10) zur Bestimmung einer Mediumstemperatur über die Temperatur einer Messstelle auf einer das Medium umschließenden Oberfläche, umfassend mindestens einen Messsensor (11) und mindestens einen Referenzsensor (12) sowie Messwertverarbeitungsmittel (16), welche über eine Zuleitung (13) mit dem Messsensor (11) und über eine Zuleitung (14) mit dem Referenzsensor (12) verbunden ist, wobei
der mindestens eine Messsensor (11) und der mindestens eine Referenzsensor (12) entlang eines hauptsächlichen thermischen Verbindungspfads zwischen der das Medium umschließenden Oberfläche und der Umgebung angeordnet sind, wobei der mindestens eine Messsensor (11) nahe der Messstelle angeordnet ist und wobei der Wärmewiderstand (R1) zwischen dem betreffenden Messsensor (11) und dem mindestens einen Referenzsensor (12) kleiner ist als der Wärmewiderstand (R2) zwischen dem betreffenden Referenzsensor (12) und der Umgebung,
**dadurch gekennzeichnet,**
**dass** der hauptsächliche thermische Verbindungspfad zwischen der das Medium umschließenden Oberfläche und der Umgebung aus dem mindestens einen Messsensor (11) und der Zuleitung (13) zum Messsensor (11) besteht.

2. Temperaturmesseinrichtung (10) nach Anspruch 1
**dadurch gekennzeichnet,**
**dass** das Verhältnis des Wärmewiderstand (R2) zwischen dem Referenzsensor (12) und der Umgebung und dem Wärmewiderstand (R1) zwischen dem Messsensor (11) und dem Referenzsensor (12) R2/R1 > 10 ist.

3. Temperaturmesseinrichtung (10) nach Anspruch 1
**dadurch gekennzeichnet,**
**dass** das Verhältnis des Wärmewiderstand (R2) zwischen dem Referenzsensor (12) und der Umgebung und dem Wärmewiderstand (R1) zwischen dem Messsensor (11) und dem Referenzsensor (12) R2/R1 > 50 ist.

4. Temperaturmesseinrichtung (10) nach Anspruch 3
**dadurch gekennzeichnet,**
**dass** die Zuleitung (13) zu mindestens einem Messsensor (11) als mineralisolierte Mantelleitung ausgebildet ist.

5. Temperaturmesseinrichtung (10) nach Anspruch 1
**dadurch gekennzeichnet,**
**dass** der mindestens eine Messsensor (11) von der Messstelle beabstandet ist.

6. Temperaturmesseinrichtung (10) nach einem der Ansprüche 1 bis 5
**dadurch gekennzeichnet,**
**dass** auf dem hauptsächlichen thermischen Verbindungspfad mindestens ein weiterer Referenzsensor angeordnet ist.

7. Verfahren zur Bestimmung einer Mediumstemperatur mit einer Temperaturmesseinrichtung (10) nach Anspruch 6,
**dadurch gekennzeichnet,**
- **dass** mit dem Referenzsensor (12) und mindestens einem weiteren Referenzsensor der Temperaturgradient entlang eines hauptsächlichen thermischen Verbindungspfads zwischen der das Medium umschließenden Oberfläche und der Umgebung bestimmt wird und
- **dass** aus dem Temperaturgradienten ein Korrekturwert zur Korrektur des Messwerts des mindestens einen Messsensors (11) ermittelt wird.

8. Verfahren nach Anspruch 7
**dadurch gekennzeichnet,**
**dass** der Temperaturgradient entlang des hauptsächlichen thermischen Verbindungspfads zwischen der das Medium umschließenden Oberfläche und der Umgebung nahe der Messtelle des mindestens einen Messsensors (11) ermittelt wird.

## Claims

1. Temperature measuring device (10) for determining a medium temperature via the temperature of a measuring point on a surface enclosing the medium, comprising at least one measuring sensor (11) and at least one reference sensor (12) and a measured value processing means (16), which is connected to the measuring sensor (11) via a feed line (13) and to the reference sensor (12) via a feed line (14), wherein
the at least one measuring sensor (11) and the at least one reference sensor (12) are arranged along a main thermal connecting path between the surface enclosing the medium and the surroundings,
wherein the at least one measuring sensor (11) is arranged close to the measuring point, and wherein the thermal resistance (R1) between the relevant measuring sensor (11) and the at least one reference sensor (12) is lower than the thermal resistance (R2) between the relevant reference sensor (12) and the surroundings,
**characterized in that**
the main thermal connecting path between the surface enclosing the medium and the surroundings consists of the at least one measuring sensor (11) and the feed line (13) to the measuring sensor (11).

2. Temperature measuring device (10) according to Claim 1,
**characterized in that**
the ratio R2/R1 of the thermal resistance (R2) between the reference sensor (12) and the surroundings and the thermal resistance (R1) between the measuring sensor (11) and the reference sensor (12) is > 10.

3. Temperature measuring device (10) according to Claim 1,
**characterized in that**
the ratio R2/R1 of the thermal resistance (R2) between the reference sensor (12) and the surroundings and the thermal resistance (R1) between the measuring sensor (11) and the reference sensor (12) is > 50.

4. Temperature measuring device (10) according to Claim 3,
**characterized in that**
the feed line (13) to at least one measuring sensor (11) is formed as a mineral-insulated sheathed cable.

5. Temperature measuring device (10) according to Claim 1,
**characterized in that**
the at least one measuring sensor (11) is spaced apart from the measuring point.

6. Temperature measuring device (10) according to one of Claims 1 to 5,
**characterized in that**
at least one further reference sensor is arranged on the main thermal connecting path.

7. Method for determining a medium temperature by using a temperature measuring device (10) according to Claim 6,
**characterized**
- **in that** by using the reference sensor (12) and at least one further reference sensor, the temperature gradient along a main thermal connecting path between the surface enclosing the medium and the surroundings is determined, and
- **in that** a correction value for correcting the measured value from the at least one measuring sensor (11) is determined from the temperature gradient.

8. Method according to Claim 7,
**characterized in that**
the temperature gradient along the main thermal connecting path between the surface enclosing the medium and the surroundings is determined close to the measuring point of the at least one measuring sensor (11).

## Revendications

1. Dispositif de mesure de température (10) permettant de déterminer une température d'un milieu par l'intermédiaire de la température d'un point de mesure sur une surface entourant le milieu, comprenant au moins un capteur de mesure (11) et au moins un capteur de référence (12) ainsi que des moyens de traitement de valeur de mesure (16) qui sont reliés par une ligne d'alimentation (13) au capteur de mesure (11) et par une ligne d'alimentation (14) au capteur de référence (12), dans lequel
ledit au moins un capteur de mesure (11) et ledit au moins un capteur de référence (12) sont disposés le long d'une voie de liaison thermique principale entre la surface entourant le milieu et l'environnement,
dans lequel ledit au moins un capteur de mesure (11) est disposé près du point de mesure, et dans lequel la résistance thermique (R1) entre le capteur de mesure (11) concerné et ledit au moins un capteur de référence (12) est inférieure à la résistance thermique (R2) entre le capteur de référence (12) concerné et l'environnement,
**caractérisé en ce que** la voie de liaison thermique principale entre la surface entourant le milieu et l'environnement est composée du au moins un capteur de mesure (11) et de la ligne d'alimentation (13) jusqu'au capteur de mesure (11).

2. Dispositif de mesure de température (10) selon la revendication 1, **caractérisé en ce que** le rapport de la résistance thermique (R2) entre le capteur de référence (12) et l'environnement et de la résistance thermique (R1) entre le capteur de mesure (11) et le capteur de référence (12) est R2/R1 > 10.

3. Dispositif de mesure de température (10) selon la revendication 1, **caractérisé en ce que** le rapport de la résistance thermique (R2) entre le capteur de référence (12) et l'environnement et de la résistance thermique (R1) entre le capteur de mesure (11) et le capteur de référence (12) est R2/R1 > 50.

4. Dispositif de mesure de température (10) selon la revendication 3, **caractérisé en ce que** la ligne d'alimentation (13) audit au moins un capteur de mesure (11) est réalisée sous la forme d'un câble sous gaine à isolant minéral.

5. Dispositif de mesure de température (10) selon la revendication 1, **caractérisé en ce que** ledit au moins un capteur de mesure (11) est espacé du point de mesure.

6. Dispositif de mesure de température (10) selon l'une quelconque des revendications 1 à 5, **caractérisé en ce qu'**au moins un autre capteur de référence est disposé sur la voie de liaison thermique principale.

7. Procédé permettant de déterminer une température d'un milieu à l'aide d'un dispositif de mesure de température (10) selon la revendication 6, **caractérisé en ce que**
- le capteur de référence (12) et au moins un autre capteur de référence permettent de déterminer le gradient de température le long de la voie de liaison thermique principale entre la surface entourant le milieu et l'environnement, et
- une valeur de correction est établie à partir du gradient de température pour corriger la valeur de mesure du au moins un capteur de mesure (11).

8. Procédé selon la revendication 7, **caractérisé en ce que** le gradient de température est établi le long de la voie de liaison thermique principale entre la surface entourant le milieu et l'environnement près du point de mesure du au moins un capteur de mesure (11).
